Europäisches Patentamt

European Patent Office

Office européen des brevets

(11) Veröffentlichungsnummer: **0 308 816**
**A1**

## EUROPÄISCHE PATENTANMELDUNG

(21) Anmeldenummer: 88115131.0

(22) Anmeldetag: **15.09.88**

(51) Int. Cl.⁴ **G11B 5/31 , H01F 41/14**

(30) Priorität: 24.09.87 DE 3732193

(43) Veröffentlichungstag der Anmeldung:
**29.03.89 Patentblatt 89/13**

(84) Benannte Vertragsstaaten:
**DE FR GB IT NL**

(71) Anmelder: **Siemens Aktiengesellschaft Berlin und München**
**Wittelsbacherplatz 2**
**D-8000 München 2(DE)**

(72) Erfinder: **Pichler, Alfred**
**Bert-Brecht-Weg 4**
**D-8031 Maisach-Gernlinden(DE)**
Erfinder: **Hertrampf, Joachim**
**Werinherstrasse 69**
**D-8000 München 90(DE)**
Erfinder: **Pachonik, Horst, Dipl.-Phys.**
**Lindenring 135**
**D-8028 Taufkirchen(DE)**

(54) **Verfahren zum Herstellen von Anschlusskontakten für Dünnfilm-Magnetköpfe.**

(57) Beim Herstellen von verstärkten Anschlußkontakten für Dünnfilm-Magnetköpfe wird ein fotolithografischer Prozeßablauf angestrebt, der es erlaubt, den hierfür notwendigen technologischen Aufwand so klein wie möglich zu halten und der den Goldverbrauch auf ein Minimum reduziert. Dazu wird eine zur Kontaktverstärkung als Turm ausgebildete Kupferschicht (222 bzw. 223) in Kontaktfenster (221), die durch eine fotoresistive Schicht (13) gebildet werden, auf eine elektrisch leitfähige Permalloyschicht (11) eines Substrates (1) galvanisch aufgebracht, bevor diese fertig strukturiert und mit einer Aluminiumoxid-Schutzschicht (14) versehen worden ist. Ein für das Anbringen eines Bonddrahtes (225) erforderlicher Goldfilm (224) wird schließlich entweder unmittelbar vor der Protektion oder nach dem Auftragen des Aluminiumoxids auf der Kupferschicht abgeschieden.

FIG 7

## Verfahren zum Herstellen von Anschlußkontakten für Dünnfilm-Magnetköpfe

Die Erfindung bezieht sich auf ein Verfahren gemäß dem Oberbegriff des Hauptanspruches.

Das Herstellen von verstärkten Anschlußkontakten - wie z. B. das Kontaktieren von Leiterbahnen auf Mikrochips in der integrierten Schaltungstechnik - ist ein technologischer Prozeßschritt, der zweckmäßigerweise direkt in den gesamten Herstellungsprozeß für einen integrierten elektronischen Baustein miteinbezogen wird. Dieser Kontaktierungsprozeß gestaltet sich jedoch häufig dann etwas problematisch, wenn für die vorgesehenen Anschlußkontakte aus bondtechnischen Gründen, weil der Abstand zwischen den Kontakten zu eng ist, die Kontaktabstände erweitert und gleichzeitig die Kontakte verstärkt ausgeführt werden müssen. Dieser Sachverhalt ist insbesondere auch in der Dünnfilm-Magnetkopftechnik gegeben. Dort sind in einer relativ dicken, auf einem Substrat aufgebrachten, als Maske dienenden Schicht Fenster eingelassen. Diese Fenster definieren die Orte für verstärkte Kontaktstellen an den Enden mehrerer Kontaktfahnen der Magnetköpfe. Der technologische Prozeßablauf für das Herstellen solcher Dünnfilm-Magnetköpfe sollte deshalb so beschaffen sein, daß sich die Magnetköpfe einfach und problemlos kontaktieren bzw. mit einem Bonddraht versehen lassen sowie gemessen werden können. Außerdem soll sich der technologische Aufwand für das fotolithografische Herstellen der verstärkten Anschlußkontakte durch zusätzliche notwendige Prozeßschritte nur unwesentlich erhöhen.

So ist ein Verfahren zum Herstellen von Dünnfilm-Magnetköpfen denkbar, bei dem am Ende des fotolithografischen Prozesses in eine ca. 50 μm dicke Protektierungsschicht aus Aluminiumoxid mittels eines chemisch löslichen Platzhalters Kontaktfenster eingelassen werden. Nachdem das Kontaktfenster in der Schutzschicht freigelegt worden ist, wird die freigelegte Kontaktoberfläche vergoldet. Dazu wird eine Golddeckschicht ganzflächig auf das Substrat galvanisch aufgebracht. Vor dem Bonden wird die Golddeckschicht in der Umgebung der freigelegten und vergoldeten Kontaktoberfläche wieder entfernt und anschließend eine Bondnadel mit Bonddraht in das Kontaktfenster einjustiert. Darin liegen auch die wesentlichen Nachteile des beschriebenen Verfahrens. So ist einerseits das ganzflächige Aufbringen der Goldauflage, obwohl nur punktuell benötigt, unwirtschaftlich und andererseits das Einjustieren des Bonddrahtes in zu kleine Kontaktfenster problematisch. Dies ist deshalb problematisch, weil beim Einjustieren die Wandung der Kontaktfenster berührt wird und damit ein erhöhtes Ausfallrisiko der Dünnfilm-Magnetköpfe verbunden ist.

Der vorliegenden Erfindung liegt daher die Aufgabe zugrunde, ein Verfahren zu der eingangs genannten Art zu schaffen, mit dem sich Anschlußkontakte für Dünnfilm-Magnetköpfe herstellen lassen, ohne daß die genannten Probleme beim Bonden auftreten, der technologische Aufwand an Prozeßschritten für das Herstellen der Anschlußkontakte zunimmt und das Aufbringen der Goldauflage unwirtschaftlich wird.

Diese Aufgabe wird gemäß der vorliegenden Erfindung bei den eingangs genannten Verfahren mit den im Kennzeichen des Patentanspruches 1 bzw. 2 beschriebenen Merkmalen gelöst. Beide Lösungen zeichnen sich insbesondere dadurch aus, daß das Herstellen der Anschlußkontakte von Dünnfilm-Magnetköpfen auf einzelnen Substratelementen einer Substratscheibe, von dem zeitlichen Prozeßablauf her, vor einem letzten Strukturierungsprozeß für die Magnetköpfe einsetzt; also dann, wenn das elektrisch leitfähige Permalloy noch ganzflächig vorhanden und eine metallische Maske schon fertig strukturiert ist. In diesem Zustand, also noch vor der Fertigstellung des Magnetkopfes erhält das Substrat eine Maskierung für galvanische Kontaktverstärkungen sowie eine bondfähige Oberflächenauflage.

Bei der im Patentanspruch 1 offenbarten Lösung wird zur Kontaktverstärkung eine als Halbturm ausgebildete Kupferschicht in die einzelnen Kontaktfenster eingebracht. Dabei ist besonders vorteilhaft, daß der Kontaktaufbau in der Dünnfilmlinie, ohne Unterbrechung durch Läppprozesse, in einem durchgehenden Arbeitsablauf hergestellt werden kann. Bei der in Anspruch 2 offenbarten Lösung hingegen werden Volltürme in die Kontaktfenster eingebracht. Dazu sind einerseits zwar zusätzliche technologische Prozeßschritte erforderlich. So wird beispielsweise das Substrat während der Kontaktierphase nach dem Läppprozeß gereinigt und als galvanische Unterlage für die bondfähige Oberflächenauflage mit einer metallischen Trägerschicht versehen. Eine andere Möglichkeit, die bandfähige Oberflächenauflage herzustellen, besteht darin, daß die Auflage unmittelbar nach dem Reinigen chemisch auf die Kupferschicht aufgebracht wird. Andererseits ist es bei den letztgenannten Lösungen von Vorteil, daß der Läppprozeß zum teilweisen Abtragen der Aluminiumoxid-Schutzschicht nicht so genau durchgeführt zu werden braucht, wie dies bei der im Anspruch 1 offenbarten Lösung erforderlich ist. Bei der Lösung gemäß Patentanspruch 1 wird auf die Kupferschicht bereits vor dem Läppen ein Goldfilm aufgebracht. Daraus ergeben sich Toleranzbedingungen für den Läppprozeß, die nur sehr schwer einzuhalten sind. Beim Läppen darf der Goldfilm keinesfalls beschädigt werden. Deshalb wird nur selten eine bündige Läppoberfläche erreicht. Dies wiederum bringt es nun mit sich, daß die Bondnadel bei sehr kleinen Kontaktfenstern beim Bonden die stehengebliebene Wandung des Kontaktfensters berühren kann. Die Größe des Kontaktfensters ist andererseits maßgeblich von der für die Kontaktverstärkungen von Dünnfilm-Magnetköpfen noch zur Verfügung stehenden Integrationsfläche auf dem Substratelement abhängig. Deshalb sind Kontaktverstärkungen in Form von Halbtürmen nur begrenzt einsetzbar. Beide vorgestellten Lösungen haben daher abhängig von den Randbedingungen des speziellen Anwendungsfalles, alternativ ihre Berechtigung und dienen dazu die Ausbeute zu erhöhen.

Weitere Einzelheiten der Erfindung werden anhand je eines Ausführungsbeispieles für beide Lösungen näher erläutert. Die nachfolgende Beschreibung nimmt hierzu Bezug auf die Zeichnung.

Dabei zeigt:

FIG 1 modellhaft eine in Substratelemente unterteilte strukturierte Substratscheibe,

FIG 2 in Draufsicht die prinzipielle Struktur eines einzelnen Substratelementes mit je zwei Anschlußkontakten für einen Dünnfilm-Magnetkopf,

FIG 3 bis FIG 7 modellhaft in aufeinanderfolgenden Schritten das fotolithografische Herstellen von verstärkten Halbturm-Anschlußkontakten auf einem mit einer Permalloyschicht versehenen Substrat und entsprechend

FIG 8 bis FIG 11 modellhaft das fotolithografische Herstellen von verstärkten Vollturm-Anschlußkontakten auf einem mit einer Permalloyschicht versehenen Substrat in seinen wesentlichen Schritten.

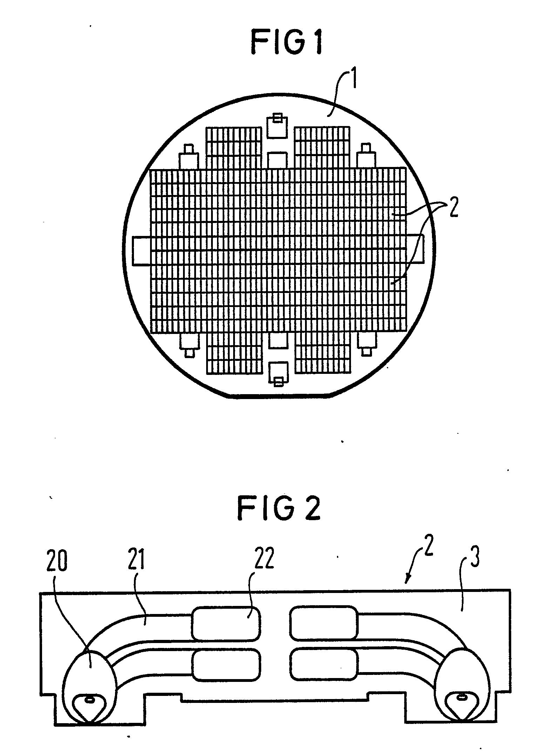

FIG 1 zeigt schematisch eine Substratscheibe 1 bzw. einen Wafer mit einer Vielzahl von einzelnen Substratelementen 2, deren prinzipielle Struktur in FIG 2 vergrößert dargestellt ist. Jedes Substratelement enthält zwei auf einer Integrationsfläche 3 angeordnete Magnetköpfe 20. An die symmetrisch zur vertikalen Achse des Substratelementes angeordneten Magnetköpfe ist jeweils ein Paar von Kontaktfahnen 21 angeschlossen. Diese verlaufen paarweise parallel und sind jeweils in Richtung auf die Mitte des Substratelementes ausgerichtet. Jede Kontaktfahne 21 weist an ihrem freien Ende eine Kontaktverstärkung 22 auf. Anstelle von nur zwei Kontaktfahnen pro Magnetkopf, wie in FIG 2 dargestellt, können Magnetköpfe aber auch drei Kontaktfahnen aufweisen. In diesem Fall muß sich bei gleichbleibender Integrationsfläche die Breite der Kontaktfenster und letztlich die der Kontaktverstärkungen zwangsläufig verringern.

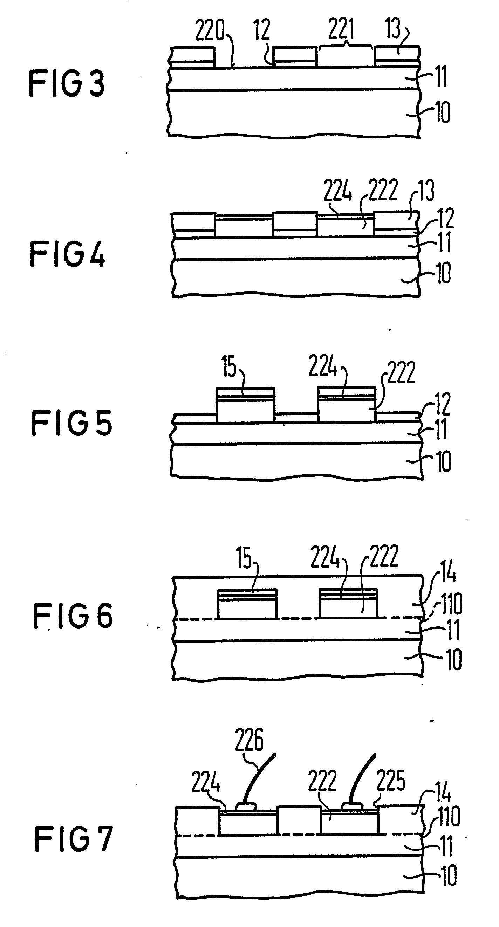

Es werden zwei Ausführungsbeispiele zum fotolithografischen Herstellen von verstärkten Anschlußkontakten für Dünnfilm-Magnetköpfe auf einem Substrat 10 beschrieben. Beide Ausführungsbeispiele gehen, wie in FIG 3 gezeigt ist, davon aus, daß auf das Substrat bereits ganzflächig eine elektrisch leitfähige Permalloyschicht 11 galvanisch aufgebracht ist. Auch ist eine für die Strukturierung der Permalloyschicht notwendige, metallische Maske 12 bereits fertiggestellt. Bei diesem Zustand wird der fotolithografische Prozeß zum Herstellen der Magnetköpfe unterbrochen, denn zunächst werden die verstärkten Anschlußkontakte galvanisch aufgebaut. Dazu wird auf die Permalloyschicht und die metallische Maske eine ca. 50 µm dicke Fotofolie 13 aufgetragen, die an Kontaktstellen 220 für die Kontaktverstärkungen 22 mittels eines Belichtungs- und Entwicklungsprozesses wieder entfernt wird. Auf diese Weise werden die Permalloyschicht freilegende Kontaktfenster 221 erzeugt, in denen die Kontaktverstärkungen aufgebaut werden.

Beim ersten Ausführungsbeispiel wird zunächst eine Kupferschicht 222 in das Kontaktfenster 221 galvanisch eingebracht, wie in FIG 4 dargestellt ist. Die Schichtdicke dieser Kupferschicht ist kleiner als die der Fotofolie 13, deshalb ist diese metallische Unterlage der späteren Kontaktverstärkung als "Halbturm" bezeichnet. Unmittelbar auf dieser Kupferschicht wird ein Goldfilm 224 galvanisch abgeschieden, der später die bondfähige Oberflächenauflage der Kontaktverstärkung bildet. FIG 4 läßt deutlich erkennen, daß die gesamte Höhe der Kontaktverstärkung 22 bestehend aus der Kupferschicht 222 und dem Goldfilm 224 derart gewählt ist, daß die Fotofolie 13 sie noch immer überragt. Danach wird die Fotofolie 13 ausgelöst.

Die Kontaktverstärkung 22 ist damit insoweit fertiggestellt, so daß nun die elektrisch leitfähige Permalloyschicht 11 strukturiert werden kann. Zuvor muß jedoch, wie in FIG 5 dargestellt, die empfindliche Oberfläche der Kontaktstelle geschützt werden. Deshalb wird auf den Goldfilm 224 eine Schutzmaskierung 15 aufgebracht. Die Schutzmaskierung ist ent sprechend der Selektivität, d.h. dem Verhältnis der Ätzraten zwischen dem Material der Schutzmaskierung 15 und dem Material der metallischen Maske 12, gewählt. Mit anderen Worten, es muß nach dem Strukturieren der Permalloyschicht mittels Ionenstrahlätzen immer noch eine Restschichtdicke der Schutzmaskierung 15 erhalten bleiben, die den Goldfilm 224 nicht nur vor Abätzen schützt, sondern auch verhindert, daß sich metallische Ätzrückstände darauf niederschlagen können. Die Vorgänge beim Strukturieren der elektrisch leitfähigen Permalloyschicht werden hier im einzelnen nicht beschrieben und sind aus Gründen der Vereinfachung auch in der Zeichnung nicht detailliert dargestellt. Diese Vorgänge sind dem Fachmann auf dem Gebiet der Dünnfilm-Magnetkopftechnologie im einzelnen geläufig und haben auch nicht mit dem Gegenstand der Erfindung zu tun.

In FIG 6 ist daher die Oberflächenstruktur 110 der strukturierten Permalloyschicht 11 lediglich schematisch angedeutet. Nach Abschluß des Io-nenstrahlätzens werden diese strukturierte Permal-loyschicht 11 einschließlich der Schutzmaskierung 15 protektiert, d.h. es wird eine Aluminiumoxid-Schutzschicht 14 ganzflächig aufgebracht. FIG 6 zeigt diesen Zustand.

Nun müssen die Kontaktverstärkungen 22 freigelegt werden. Dies erfolgt durch ganzflächiges Läppen der Substratoberfläche. Da sich die metallischen Ätzrückstände mit dem Aluminiumoxid der Protektierung lokal chemisch verbunden haben, werden auch diese Rückstände bei diesem Läppprozeß zusammen mit der Oberfläche der Schutzmaskierung 15 abgetragen. Allerdings darf beim Läppen keinesfalls die Schutzmaskierung 15 vollständig abgetragen werden, da sonst die Oberfläche des Goldfilmes 224 beschädigt werden könnte und dann nachbehandelt werden müßte. Auf der anderen Seite möchte man die Aluminiumoxid-Schutzschicht 14 so weit abtragen, daß sie mit der Oberfläche des Goldfilmes 224 nahezu bündig wird. An die Genauigkeit des Läppprozesses müssen daher hohe Anforderungen gestellt werden, dennoch verbleiben zwangsläufig Kontaktfenster, nachdem auch die Schutzmaskierung 15 chemisch abgelöst ist. Dieser Zustand ist in FIG 7 darge-stellt. Dort ist eindeutig eine stehenbleibende Läppkante 225 zu erkennen, die beim späteren Bonden in jedem Fall das Kontaktieren eines Bonddrahtes 226 erschwert. Dies gilt insbesondere bei einer hohen Integrationsdichte, bei der aus geometrischen Gründen für die die Kontaktstellen 22 nur eine geringe Fläche zur Verfügung steht. Damit ist verdeutlicht, daß das eigentliche Kontaktieren der Bonddrähte 226 ein technologisch aufwendiger Herstellungsschritt ist, deshalb ist es zweckmäßig, die fertiggestellten Magnetköpfe auf dem noch unzerteilten Substrat zu messen, um gegebenenfalls bei einer zu hohen Ausschußrate den Wafer gar nicht mehr teilen zu müssen und ein überflüssiges Kontaktieren von fehlerhaften Magnetköpfen von vornherein ausschalten zu können.

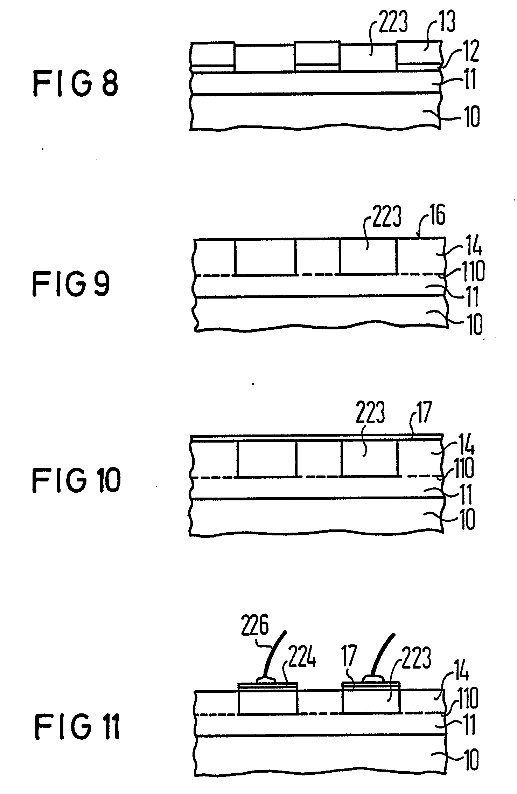

Aus der vorstehenden Beschreibung des ersten Ausführungsbeispiels ergibt sich, daß die überstehenden Läppkanten 225 beim späteren Ankontaktieren der Bonddrähte 226 Schwierigkeiten bereiten können, die bei sehr kleinen Kontaktfenstern dieses Herstellungsverfahren für Kontaktverstärkungen 22 sogar unwirtschaftlich machen. Im zweiten nachfolgend anhand der FIG 8 bis 11 beschriebenen Ausführungsbeispiel ergibt sich ein Aufbau der Kontaktverstärkung 22, bei dem diese Schwierigkeiten nicht auftreten, allerdings ist dann der Fertigungsablauf technologisch aufwendiger. Auch bei diesem Ausführungsbeispiel wird von einer Struktur ausgegangen, die bereits vorstehend anhand von FIG 3 erläutert wurde. FIG 8 zeigt nun, daß in das Kontaktfenster 221 zunächst eine Kupferschicht 223 eingebracht wird, deren Schichtdicke derart bemessen ist, daß sie die Oberfläche der fotoresistiven Schicht 13 nicht überragt, sondern nahezu bündig ist. Im Gegensatz zu den vorstehend beschriebenen ersten Ausführungsbeispiel wird daher hier die Kupferschicht 223 als "Vollturm" bezeichnet. Nach diesem Prozeßschritt wird die Fotofolie 13 abgelöst. Damit liegt die metallische Maske 12 frei, so daß die Permalloyschicht 11 mittels Ionenstrahlätzen in bekannter Technologie strukturiert werden kann. Auch hierbei ist zu beachten, daß im Ablauf dieses Strukturierungsprozesses die metallische Maske 12 entfernt wird und dabei auch die Kupferschicht 223 im Verhältnis ihrer Selektivität zu der metallischen Maske angegriffen wird. Auch dieses teilweise Abtragen der Kupferschicht 223 beim Strukturierungsprozeß muß beim vorherigen Aufbauen der Kupferschicht 223 berücksichtigt werden.

In FIG 9 ist wieder schematisch die Oberflächenstruktur 110 der fertiggestellten strukturierten elektrisch leitfähigen Permalloyschicht 11 schematisch angedeutet. Wiederum wird nun nach dem Strukturierungsprozeß der Permalloyschicht 11 die Gesamtsubstratoberfläche protektiert, d.h. ganzflächig mit der Aluminiumoxid-Schutzschicht 14 bedeckt. Auch hier schließt sich ein Läppprozeß an, um die Kontaktverstärkungen freizulegen. In diesem Fall ist jedoch das teilweise Abtragen der Aluminiumoxid-Schutzschicht wesentlich unproblematischer. Der Läppprozeß wird so weit durchgeführt, daß sich eine bündige Läppoberfläche 16 ergibt, in der die Kupferschicht 223 der Kontaktverstärkungen 22 freigelegt ist. FIG 9 zeigt diesen Zustand.

Wie FIG 10 illustriert, wird auf diese Läppoberfläche 16 eine metallische Trägerschicht 17 ganzflächig aufgebracht. Diese Trägerschicht ist im Gegensatz zu dem vorstehend beschriebenen Ausführungsbeispiel hier deshalb notwendig, da nun nach dem Strukturieren der elektrisch leitfähigen Permalloyschicht nicht mehr alle Kontaktstellen elektrisch untereinander verbunden sind und deswegen galvanisch der Goldfilm 224 auf der Kupferschicht 223 nicht unmittelbar abgeschieden werden kann.

Nach dem Fertigstellen der bondfähigen Oberflächen der Kontaktverstärkungen 22 durch Abscheiden des Goldfilmes 224 sind die Dünnfilm-Magnetköpfe mit samt ihren Kontaktstellen fertiggestellt. Wie im vorigen Ausführungsbeispiel können die noch unterteilten Substrate zunächst ausgemessen werden, um sich das Zerlegen der einzelnen Substratelemente 2 und das Ankontaktieren an der Bonddrähte 225 bei einer zu hohen Ausschußrate zu ersparen. Nur für gut befundene Substrate werden dann die einzelnen Substratelemente 2 zerlegt und die vereinzelten Magnetköpfe durch Ankontaktieren der Bonddrähte 226 fertige stellt. Die Struktur des fertigen Magnetkopfes ist schematisch in FIG 11 dargestellt. Dabei ist verdeutlicht, daß hier die Kontaktverstärkungen im Gegensatz zum vorherbeschriebenen Ausführungsbeispiel über die Oberfläche der an Aluminiumoxid-Schutzschicht 14 hinausragen, so daß das Bonden auch bei kleiner geometrischer Oberfläche wesentlich unproblematischer ist.

Beide, in zwei Ausführungsbeispielen beschriebenen Verfahren besitzen gegenüber der konventionellen Technologie den Vorteil, daß das Herstellen von verstärkten Anschlußkontakten für Dünnfilm-Magnetköpfe zu einem Zeitpunkt einsetzt, an dem diese noch nicht fertiggestellt sind. Das Herstellen der Anschlußkontakte erfolgt also während der Herstellungsphase der Magnetköpfe. Hierbei wird in beiden Fällen die ungeschützte und noch nicht strukturierte, elektrisch leitfähige Permalloyschicht, wie beschrieben, ausgenutzt. Dieses äußert sich darin, daß in beiden Fällen ein geringerer Goldverbrauch zu verzeichnen ist, daß im Fall der Halbturmlösung die Anzahl der fotolithografischen Prozeßschritte geringer ist und daß im Fall der Vollturmlösung sowie mit Einschränkung im Fall der Halbturmlösung die Wandung der Kontaktfenster beim Bonden nicht berührt wird.


**Ansprüche**

1. Verfahren zum Herstellen von Anschlußkontakten für Dünnfilm-Magnetköpfe auf einem Substrat, das in einzelne Substratelemente mit je zwei Schreib-/ Leseköpfen unterteilt ist, bei dem die Substratoberfläche ganzflächig mit einer, elektrisch leitfähigen Permalloyschicht bedeckt wird, die unter anderem eine Vielzahl von Kontaktstellen mit jeweils zum Magnetkopf hin gerichteten Kontaktfahnen aufweist und mittels einer metallischen Maske durch Ionenstrahlätzen strukturiert wird und bei dem die strukturierte Permalloyschicht, bis auf die Kontaktstellen, die für das Anbringen eines Bonddrahtes mit einem galvanisch abgeschiedenem Goldfilm versehen sind, mit einer Aluminiumoxid-Schutzschicht ganzflächig bedeckt wird,
**dadurch gekennzeichnet,**
daß auf die maskierte, elektrisch leitfähige Permalloyschicht (11), eine fotoresistive Schicht (13) aufgebracht wird und in die fotoresistive Schicht durch einen Belichtungs- und Entwicklungsprozeß an Kontaktstellen (220) Kontaktfenster (221) eingelassen werden, die die elektrisch leitfähige Permalloyschicht freilegen,
daß auf die freigelegte Permalloyschicht (11) eine als Halbturm ausgebildete Kupferschicht (222) galvanisch aufgebracht wird, deren Schichtdicke kleiner ist als die der fotoresistiven Schicht (13),
daß auf die als Halbturm ausgebildete Kupferschicht (222) der Goldfilm (224) galvanisch abgeschieden und dieser zum Schutz gegen das Ionenstrahlätzen mit einer Maskierung (15) versehen wird,
daß die Reste der fotoresistiven Schicht (13) auf der elektrisch leitfähigen Permalloyschicht (11) entfernt werden und daß diese danach strukturiert wird,
daß auf diese strukturierte Permalloyschicht (110) einschließlich der Maskierung (15) die Aluminiumoxid-Schutzschicht (14) zunächst ganzflächig aufgebracht und danach durch mechanisches Bearbeiten für das Anbringen des Bonddrahtes (225) auf dem Goldfilm (224) wieder so weit abgetragen wird, bis die Maskierung freiliegt und entfernt werden kann.

2. Verfahren zum Herstellen von verstärkten Anschlußkontakten für Dünnfilm-Magnetköpfe auf einem Substrat, das in einzelne Substratelemente mit je zwei Schreib-/Leseköpfen unterteilt ist, bei dem die Substratoberfläche ganzflächig mit einer elektrisch leitfähigen Permalloyschicht bedeckt wird , unter anderem eine Vielzahl von Kontaktstellen mit jeweils zum Magnetkopf hin gerichteten Kontaktfahnen aufweist und mittels die einer metallischen Maske durch Ionenstrahlätzen strukturiert wird und bei dem die strukturierte Permalloyschicht, bis auf die Kontaktstellen, die für das Anbringen eines Bonddrahtes mit einem Goldfilm versehen sind, mit einer Aluminiumoxid-Schutzschicht ganzflächig bedeckt wird,
**dadurch gekennzeichnet,** daß auf die maskierte elektrisch leitfähige Permalloyschicht (11), eine fotoresistive Schicht (13) aufgebracht wird und in die fotoresistive Schicht durch einen Belichtungs- und Entwicklungsprozeß an Kontaktstellen (220) Kontaktfenster (221) eingelassen werden, die die elektrisch leitfähige Permalloyschicht freilegen,
daß auf die freigelegte Permalloyschicht (11) eine als Vollturm ausgebildete Kupferschicht (223) galvanisch aufgebracht wird, deren Schichtdicke kleiner ist als die der fotoresistiven Schicht (13),
daß die Reste der fotoresistiven Schicht (13) auf der elektrisch leitfähigen Permalloyschicht (11) entfernt werden und daß diese danach strukturiert wird,
daß auf diese strukturierte Permalloyschicht (110) einschließlich der als Vollturm ausgebildeten Kupferschicht (223) die Aluminiumoxid-Schutzschicht (14) zunächst ganzflächig aufgebracht und danach durch mechanisches Bearbeiten so weit abgetragen wird, bis die verbleibenden Reste der Schutzschicht mit der Kupferschicht eine bündige Oberfläche (16) bilden,

daß die bündige Oberfläche (16) gereinigt und auf dieser an den Kontaktstellen (220) der Goldfilm (224) erzeugt wird.

3. Verfahren nach Anspruch 2, **dadurch gekennzeichnet**, daß der Goldfilm (224) durch chemisches Abscheiden aufgebracht wird.

4. Verfahren nach Anspruch 2, **dadurch gekennzeichnet**, daß die bündige Oberfläche (16) ganzflächig mit einer metallischen Trägerschicht (17) bedeckt, auf dieser an den Kontaktstellen (220) zum Anbringen des Bonddrahtes (225) der Goldfilm galvanisch abgeschieden und die nicht vergoldeten Teile der metallischen Trägerschicht wieder entfernt werden.

EP 0 308 816 A1

# FIG 1

# FIG 2

FIG 3

FIG 4

FIG 5

FIG 6

FIG 7

FIG 8

FIG 9

FIG 10

FIG 11

**Europäisches Patentamt**

# EUROPÄISCHER RECHERCHENBERICHT

Nummer der Anmeldung

EP 88 11 5131

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 613 404 (M. TABEI) <br> * Ansprüche 1-9; Spalte 1, Zeilen 15-22 * <br> --- | 1,2 | G 11 B 5/31 <br> H 01 F 41/14 |
| A | DE-A-3 132 452 (SIEMENS AG) <br> * Ansprüche 1,6,10; Seiten 10-12 * <br> --- | 1,2 | |
| A | US-A-4 614 563 (T. KUBO) <br> * Figur 1; Ansprüche 1-6 * <br> ----- | 1,2 | |

**RECHERCHIERTE SACHGEBIETE (Int. Cl.4)**

G 11 B
H 01 F

Der vorliegende Recherchenbericht wurde für alle Patentansprüche erstellt

| Recherchenort | Abschlußdatum der Recherche | Prüfer |
|---|---|---|
| DEN HAAG | 28-11-1988 | VITZTHUM N.A. |